# EUROPEAN PATENT APPLICATION

(11) **EP 2 400 167 A2**
(43) Date of publication of application: **28.12.2011**
(21) Application number: 11170503.4
(22) Date of filing: 20.06.2011
(51) Int. Cl.: F16B 13/06

(54) **Anchor**

(30) Priority: 24.06.2010 JP 2010143614; 26.05.2011 JP 2011117966
(71) Applicant: N-Pat Co. Ltd., Osaki-shi Osaka 552-0022 (JP)
(72) Inventor: Ikuno, Makoto, Osaka, 552-0022 (JP)
(74) Representative: HOFFMANN EITLE

(57) **Abstract**

The present invention is intended to provide an anchor that makes it possible to check the placement condition of the anchor easily to realize efficient and safe check after the placement. An anchor 1 includes an expansion member 3 that permits a shaft part 23 to pass therethrough while being placed between a base portion of an anchor bolt 2 and a spreading sleeve 4. The expansion member 3 includes wing-like expansion parts 34 that are caused to expand by pressing force exerted in the axial direction of the shaft part 23. The anchor bolt 2 causes the shaft part 23 to rotate in response to the rotation of the base portion of the anchor bolt 2, thereby driving a cone nut 5 into the spreading sleeve 4. As a result, spreading parts spread outwardly. Further, the base portion of the anchor bolt 2 presses the expansion member 3 in response to threaded insertion of the shaft part 23 to cause the wing-like expansion parts to expand.

## Description

This application is based on the applications No. 2010-143614 and No. 2011-117966 filed in Japan, the contents of which are hereby incorporated by reference.

### TECHNICAL FIELD OF INVENTION

The present invention relates to an anchor to be attached to various types of skeletons such as concrete buildings and structures, and more specifically, relates to an anchor that is suited for attachment to ceiling structures.

### BACKGROUND ART

In order to attach hanging objects such as air conditioners, lighting fixtures, and various types of pipes to an existing ceiling structure of a building such as that made of concrete, anchors intended to support the hanging objects are fixed to the ceiling structure. Conventionally known anchors used for this purpose are disclosed for example in Japanese Patent Application Laid-Open No. 10-231583 (1998) (patent literature 1), and in Japanese Patent Application Laid-Open No. 10-110475 (1998) (patent literature 2).

Referring for example to the anchor disclosed in patent literature 1, it includes a spreading sleeve, and a cone nut in the form of a truncated cone. The spreading sleeve is swaged to be integrated with a tip portion of a steel bar, and in which multiple slits extending in the axial direction from the tip of the spreading sleeve are defined. The edge of a smaller diameter of the cone nut is press-fitted into a tip portion of the spreading sleeve. Regarding placement of this anchor, the anchor is inserted into a concrete hole with the cone nut placed nearest the hole. Then, with the tip of the cone nut in contact with a bottom portion of the hole, the steel bar is struck for example with a hammer to drive the anchor into the hole. The strike with a hammer presses the cone nut into the spreading sleeve, so that the tip portion of the spreading sleeve spreads outwardly in the radius direction while cutting into a concrete wall and the like along the tapered surface of the cone nut. As a result, the anchor is fixed to a skeleton.

Referring to the anchor disclosed in patent literature 2, it includes an anchor socket fixedly pressed-fitted into a concrete hole, and an anchor bolt threaded into the anchor socket through an opening at one end portion of the anchor socket. A slit is defined in an opposite end portion of the anchor socket. A head is integrally provided at a tip portion of the shank of a shaft part of the anchor bolt. The head is press-fitted into the inner circumference of the opposite end portion of the anchor socket to causes the opposite end portion to spread. Regarding placement of this anchor, the anchor socket is inserted in advance into a concrete hole with the opposite end portion placed nearest the hole. Then, the anchor bolt is threadedly inserted into the anchor socket through the opening at the one end portion of the anchor socket. In response to the threaded insertion of the anchor bolt, the head at the tip portion of the anchor bolt causes the opposite end portion of the anchor socket to spread, thereby fixing the anchor.

### TECHNICAL PROBLEM AND ITS SOLUTION

The anchor disclosed in patent literature 1 is not suited for fixation to a ceiling structure. The reason therefor is that, in the anchor of patent literature 1, the steel bar suspended from the ceiling structure, and the cone nut press-fitted into the tip portion of the spreading sleeve are structurally separated. So, if the ceiling structure is shaken strongly for example by an earthquake, the cone nut falls off the inside of the spreading sleeve, resulting in a fear of drop of the spreading sleeve integrated with the tip portion of the steel bar from the ceiling structure.

Meanwhile, the anchor of patent literature 2 includes the head provided integrally with the anchor bolt, and which causes the anchor socket to spread. Thus, there is no fear of drop of the anchor bolt, so that the anchor of patent literature 2 does not suffer from the problem generated in patent literature 1.

Placement of the anchor of patent literature 2 on a ceiling structure requires insertion of the anchor bolt into the anchor socket through the opening at the one end portion of the anchor socket, and rotation of the inserted anchor bolt. This process generates a problem as one cannot check to see visually if the head has caused the anchor socket to spread to its normal placement condition. In particular, for placement of this anchor on a ceiling structure, a worker may define a hole in the ceiling structure with an extension jig from a lower floor. In this case, the worker may insert the anchor into the hole with a different extension jig, and then rotate the inserted anchor. This placement process makes a distance between the eyes of the worker and the anchor greater, so visual check is made more difficult. So, according to a generally and conventionally employed way, determination as to whether the anchor of patent literature 2 is firmly fixed should be made based on whether the rotation torque of the anchor bolt has reached a fixed value. The rotation torque of the anchor bolt having reached the fixed value during the process means completion of the placement.

The worker relies heavily on his experience for management of the rotation torque. This easily causes unevenness of the placing quality of anchors, while making it difficult to find faulty placement even if it is generated.

The conventionally employed way may necessitate substantial labor as a field supervisor may check the placement condition of each anchor after multiple anchors are placed on a ceiling structure. To be specific, the field supervisor should check the placed anchors one by one with a torque wrench and the like to see if the rotation torques thereof are at the fixed value or more, resulting in an excessive processing burden. The field supervisory may have to climb up to the height of the ceiling structure to check the placement conditions of the anchors one by one. Meanwhile, in many cases, the height of the ceiling structure is five meters or more in the case of large-scale buildings such as school facilities, hospitals, and commercial buildings. So, this checking process is attended with danger.

The present invention has been made to solve the aforementioned problems. It is an object of the present invention to provide an anchor that makes check of the placement condition of the anchor easy to realize efficient and safe check after the placement of the anchor.

In order to solve the aforementioned problems, according to one structure of the anchor of the present invention, the anchor includes: an anchor bolt including a shaft part with a male screw thread; a cone part placed at a tip portion of the shaft part, the cone part having an outer diameter that gradually reduces in a direction toward a base portion of the shaft part; a spreading including spreading parts formed at a tip portion of a tubular body, the spreading parts being formed by a longitudinally cut in such a manner that the spreading parts spread outwardly, the spreading sleeve being attached to the shaft part while an edge of a smaller diameter of the cone part engages in tip portions of the spreading parts; a rotation control section provided at a base portion of the shaft part, the rotation control section having a diameter larger than the outer diameter of the shaft part; and an expansion member including wing-like expansion parts caused to expand by pressing force exerted in the axial direction of the shaft part, the expansion member permitting the shaft part to pass therethrough while being placed between the spreading sleeve attached to the shaft part and the rotation control section placed at the base portion of the shaft part. The rotation of the rotation control section causes the cone part to move toward the base portion of the shaft part, thereby causing the spreading parts of the spreading sleeve to spread outwardly. The rotation of the rotation control section also causes the rotation control section to move toward the tip portion of the shaft part to press the expansion member, thereby causing the expansion parts to expand.

In this structure, the rotation of the rotation control section causes the cone part placed at the tip portion of the shaft part of the anchor bolt to move toward the base portion of the shaft part, thereby causing the spreading parts of the spreading sleeve to spread outwardly. This prevents the cone part from falling off the inside of the spreading sleeve, so that the anchor bolt does not drop from a ceiling structure. Further, the rotation control section provided at the base portion of the shaft part of the anchor bolt moves toward the tip portion of the shaft part in response to the rotation of the rotation control section, thereby pressing the expansion member to cause the expansion parts to expand. So, it can be determined by seeing the expansion conditions of the wing-like expansion parts if the spreading parts of the spreading sleeve spread outwardly to make the anchor fixed.

According to another structure of the anchor of the present invention, the anchor includes: an anchor bolt including a shaft part with a male screw thread, and a rotation control section provided at a base portion of the shaft part, the rotation control section having a diameter larger than the outer diameter of the shaft part; a spreading sleeve including spreading parts formed at a tip portion of a tubular body that permits the shaft part to pass therethrough, the spreading parts being formed by a longitudinally cut slot in such a manner that the spreading parts spread outwardly; a cone nut the outer diameter of which gradually reduces in the axial direction of the shaft part, the cone nut including a screw through hole defined therein to threadedly engage the male screw thread of the shaft part, the cone nut being attached to the shaft part with an edge of a smaller diameter of the cone nut engaging in a tip portion of the spreading sleeve; and an expansion member including wing-like expansion parts caused to expand by pressing force exerted in the axial direction of the shaft part, the expansion member permitting the shaft part to pass therethrough while being placed between the rotation control section of the anchor bolt and the spreading sleeve. The anchor bolt causes the shaft part to rotate in response to the rotation of the rotation control part to drive the cone nut into the spreading sleeve, thereby causing the spreading parts to spread outwardly. The rotation control part presses the expansion member in response to threaded insertion of the shaft part to cause the wing-like expansion parts to expand.

In this structure, the anchor bolt causes the shaft part to rotate in response to the rotation of the rotation control section to drive the cone nut into the spreading sleeve. This causes the spreading parts of the spreading sleeve to spread outwardly to make the anchor fixed. Further, the cone nut threadedly engages the shaft part in this structure. So, the cone nut does not fall off the inside of the spreading sleeve, thereby preventing the anchor bolt from dropping from a ceiling structure.

The anchor bolt of this structure realizes threaded insertion of the shaft part in response to the rotation of the rotation control section. Then, a base portion of the anchor bolt presses the expansion member to cause the wing-like expansion parts to expand. So, it can be determined by seeing the expansion conditions of the wing-like expansion parts if the spreading parts of the spreading sleeve spread outwardly to make the anchor fixed. The placement condition of the anchor can be checked visually after the placement of the anchor. In particular, the expansion conditions of the wing-like expansion parts can be checked visually even at a position far from the anchor.

Preferably, a closed-end screw hole to receive therein a bolt is defined at an end surface of the rotation control section of the anchor bolt, and a through hole communicatively coupled to a bottom portion and its vicinity of the screw hole is defined in a side surface of the rotation control section of the anchor bolt. Still preferably, the bottom portion of the screw hole is provided with a deformable material that is deformed in response to attachment of the bolt in the screw hole. The deformable material may be caused to deform in response to attachment of the bolt in the screw hole, thereby allowing one part of the deformable material to project outside from the through hole.

In this structure, when the bolt is attached in the screw hole defined in the base portion of the anchor bolt, it is determined if the deformable material goes outside from the through hole defined in the side surface of the base portion of the anchor bolt. Thus, the attachment condition of the bolt in the screw hole can be checked visually.

The above-described deformable material may be a flexible material made of oil-based clay colored in a certain color. The deformable material is not necessary to be the flexible material. The deformable material may include an attachment part attached to the bottom portion of the screw hole and a flexible part bended in advance into substantial V-shape. With this structure, one end portion of the flexible part may be fixed to the attachment part while another end portion is placed at a position, facing the through hole. In this case, preferably, the flexible part is caused to expand the bended portion in response to the attachment of the bolt, thereby allowing another end portion placed facing the through hole to project outside from the through hole.

According to a still another structure of the anchor of the present invention, the anchor includes: an anchor bolt including a shaft part with a male screw thread, and a cone part placed at a tip portion of the shaft part, the cone part having an outer diameter that gradually reduces in a direction toward a base portion of the shaft part; a spreading sleeve including spreading parts formed at a tip portion of a tubular body, the spreading parts being formed by a longitudinally cut slot in such a manner that the spreading parts spread outwardly, the spreading sleeve being attached to the shaft part while an edge of a smaller diameter of the cone part engages in tip portions of the spreading parts; a nut member threadedly engaging the male screw thread of the shaft part at the base portion of the shaft part; and an expansion member including wing-like expansion parts caused to expand by pressing force exerted in the axial direction of the shaft part, the expansion member permitting the shaft part to pass therethrough while being placed between the spreading sleeve attached to the shaft part and the nut member placed at the base portion of the shaft part. The rotation of the nut member causes the cone part to move toward the base portion of the shaft part, thereby causing the spreading parts of the spreading sleeve to spread outwardly. The rotation of the nut member also causes the nut member to move toward the tip portion of the shaft part to press the expansion member, thereby causing the expansion parts to expand.

In this structure, the rotation of the nut member drives the cone part of the anchor bolt into the spreading sleeve to cause the spreading parts to spread outwardly, thereby fixing the anchor. The cone part is also part of the anchor bolt in this structure. So, the cone part does not fall off the inside of the spreading sleeve, thereby preventing the anchor bolt from dropping from a ceiling structure.

In this structure, the nut member moves toward the tip portion of the shaft part in response to the rotation of the nut member, thereby pressing the expansion member to cause the expansion parts to expand. So, it can be determined by seeing the expansion conditions of the wing-like expansion parts if the spreading parts of the spreading sleeve spread outwardly to make the anchor fixed. The placement condition of the anchor can be checked visually after the placement of the anchor. In particular, the expansion conditions of the wing-like expansion parts can be checked visually even at a position far from the anchor.

Preferably, in this structure, the expansion member further includes an identifying member provided to each of the wing-like expansion parts to expand. The identifying member is provided to allow check of the expansion condition of each of the expansion parts. The identifying member may be provided for example by applying a coating colored in a certain color such as red and yellow to each of the wing-like expansion parts. Still preferably, the colored coating to be applied has fluorescent characteristics or phosphorescent characteristics. The identifying member may alternatively be provided for example by attaching a reflector for forming light reflection to each of the wing-like expansion parts.

This structure makes check of the expansion conditions of the wing-like expansion parts relatively easy when the placement condition of the anchor is checked after its placement.

As described above, the anchor of the present invention does not suffer from drop of the anchor bolt as the cone nut threadedly engages the shaft part of the anchor bolt. Further, during placement of the anchor, the base portion of the anchor bolt presses the expansion member in response to threaded insertion of the shaft part to cause the wing-like expansion parts to expand. So, the placement condition of the anchor can be checked by visually checking the expansion conditions of the expansion parts after the placement. Thus, the present invention makes it possible to check the placement condition of the anchor easily to realize efficient and safe check after the placement.

### BRIEF DESCRIPTION OF DRAWINGS

Fig. 1 is a perspective view showing an anchor of a first preferred embodiment of the present invention with all parts of the anchor assembled;
Fig. 2 is a perspective view of the anchor with all the parts of the anchor separated;
Fig. 3 is a longitudinal sectional view of the anchor with all the parts of the anchor assembled;
Fig. 4 shows an example of a first step of a process of placing the anchor;
Fig. 5 shows an example of a second step of the process of placing the anchor;
Fig. 6 shows an example of a third step of the process of placing the anchor;
Fig. 7 shows an example of a first step of a process of attaching a connecting bolt to the anchor;
Fig. 8 shows an example of a second step of the process of attaching the connecting bolt to the anchor;
Fig. 9 is a perspective view of an anchor of a second preferred embodiment of the present invention with all parts of the anchor separated;
Fig. 10 shows an example of a first step of a process of placing the anchor;
Fig. 11 shows an example of a second step of the process of placing the anchor; and
Fig. 12 is a perspective view showing an enlarged view of a nut part of an anchor bolt of a third preferred embodiment;
Fig. 13 shows an example of a first step of a process of attachment of the connecting bolt to the anchor of the third preferred embodiment;
Fig. 14 shows an example of a second step of a process of attachment of the connecting bolt to the anchor of the third preferred embodiment;
Fig. 15 shows a modification of an expansion member that is a constituent member of the anchor; and
Figs. 16A and 16B show an exemplary structure of the anchor bolt having a shaft part and the nut part provided separately.

### EMBODIMENTS OF INVENTION

Preferred embodiments of the present invention are described in detail below with reference to figures. In the description given below, those elements which are shared in common among the preferred embodiments are represented by the same reference numerals, and these elements are not discussed repeatedly for the same description.

### (First Preferred Embodiment)

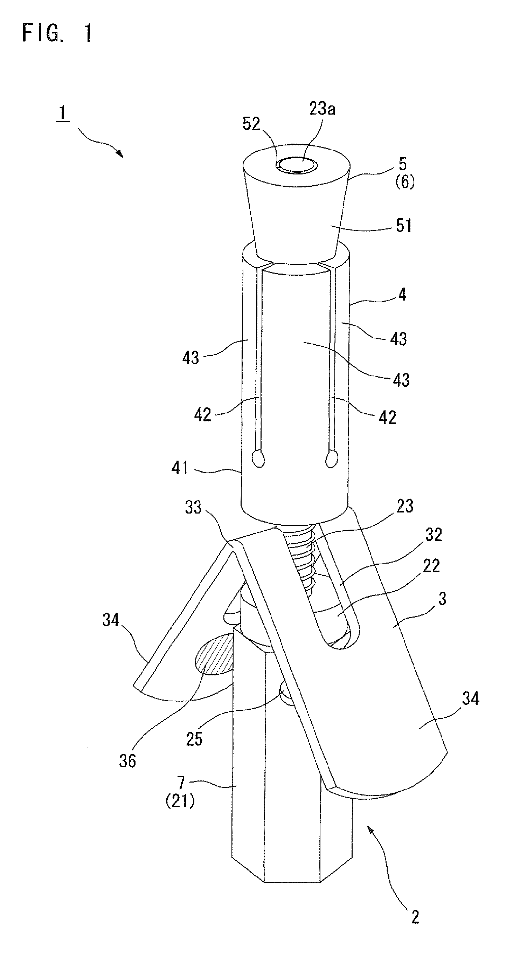

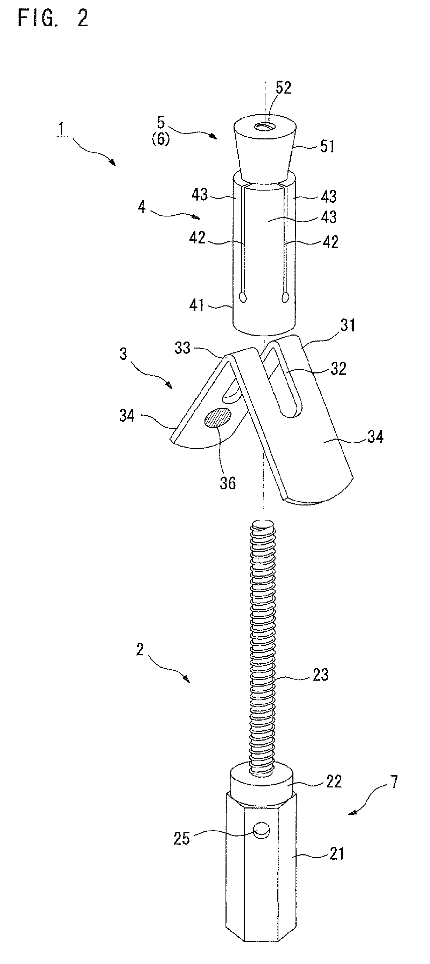

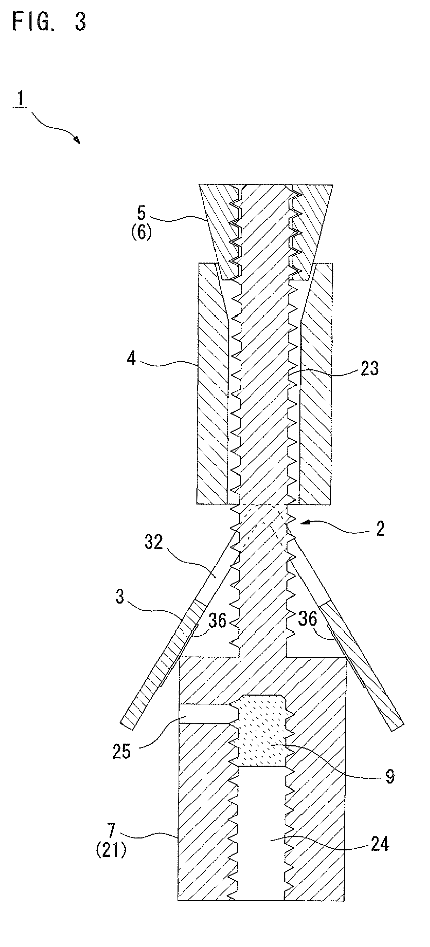

Fig. 1 is a perspective view showing an anchor 1 of a first preferred embodiment of the present invention with all parts of the anchor 1 assembled. Fig. 2 is a perspective view of the anchor 1 with all the parts of the anchor 1 separated. Fig. 3 is a longitudinal sectional view of the anchor 1 with all the parts of the anchor 1 assembled.

The anchor 1 of the first preferred embodiment includes an anchor bolt 2, a V-shaped expansion member 3, a spreading sleeve 4, and a cone nut 5. The anchor 1 is to be attached to various types of skeletons such as concrete buildings and structures, and is suited for attachment especially to ceiling structures.

The anchor bolt 2 includes a shaft part 23 of a predetermined length that has a tip portion with a male screw thread. The anchor bolt 2 also includes a rotation control section 7 at its base portion for causing the shaft part 23 to rotate. The rotation control section 7 is constructed of a prismatic nut part 21 of a predetermined length, and a cylindrical pressing part 22. The shaft part 23, the nut part 21, and the pressing part 22 of the anchor bolt 2 are formed integrally, and which have the same axial center. The shaft part 23 is connected at its base portion to the pressing part 22. The pressing part 22 is connected at its base portion to the nut part 21. As an exemplary way to form the pressing part 22, edge corners of the nut part 21 may be rounded for example by cutting. The outer diameter of the rotation control section 7 of the anchor bolt 2 is set to be larger than that of the shaft part 23. This allows the rotation control section 7 to press the expansion member 3 as the shaft part 23 is threadedly driven into a hole H as described later.

As shown in Fig. 3, a closed-end screw hole 24 coaxial with the shaft part 23 is defined at the lower end surface of the nut part 21 to extend further into the nut part 21 as part of the rotation control section 7 of the anchor bolt 2. Use of the screw hole 24 is such that a connecting bolt such as a hanger bolt and a bracing bolt is inserted into the screw hole 24 to support a steel bar or an angle bar in suspended position. A through hole 25 communicatively coupled to a bottom portion and its vicinity of the screw hole 24 is defined in a side surface of the nut part 21 of the anchor bolt 2. The bottom portion of the screw hole 24 is provided with a deformable material 9 that is deformed in response to attachment of the connecting bolt, and is filled with a flexible material 91 that has flexibility as the deformable material 9 of the first preferred embodiment. The flexible material 91 is made of oil-based clay colored for example in red. The oil-based clay functions as a rust inhibitor for its oiliness, thereby suppressing deterioration of the connecting bolt.

The expansion member 3 of the first preferred embodiment is formed by bending a plate body 31 that is a substantially strip-shaped flat metal plate, for example. The plate body 31 has an insertion hole 32 in the form of a long hole or an ellipse that is defined in advance, for example before the plate body 31 is bent. The plate body 31 in which the insertion hole 32 is defined is bent such that bending at a predetermined angle is formed at a position spaced substantially the same distance from the opposite edges of the plate body 31, thereby forming the expansion member 3 into a V-shape in side view. So, the expansion member 3 is constructed of a bent part 33 at its center, and wing-like expansion parts 34 defined at the opposite edges of the bent part 33.

The insertion hole 32 permits the shaft part 23 of the anchor bolt 2 to pass therethrough for example when the expansion member 3 is in the form of an inverted V-shape with the bent part 33 placed at the top and with the tip ends of the expansion parts 34 pointing downward as shown in Fig. 2. At this time, the lower surfaces of the expansion parts 34 as a pair are in contact with the upper edge of the pressing part 22 of the anchor bolt 2. The lower surfaces of the expansion parts 34 as a pair are each provided with an identifying member 36 by which the expansion conditions of the expansion parts 34 can be seen from below.

The identifying member 36 is a colored coating colored in red or yellow, for example. If used as the identifying member 36, the colored coating preferably has additional characteristics such as fluorescent characteristics and phosphorescent characteristics. Or, the identifying member 36 may be made of a material different from a colored coating. By way of example, a reflector for forming light reflection may be attached as the identifying member 36 to the lower surface of each of the expansion parts 34.

The spreading sleeve 4 is a tubular body 41 to receive the shaft part 23 of the anchor bolt 2 therein. The shape of the spreading sleeve 4 is such that multiple longitudinally cut slots 42 are provided at a tip portion of the tubular body 41, and that sections defined by the multiple longitudinally cut slots 42 form spreading parts 43 that spread outwardly. The spreading parts 43 of the first preferred embodiment have a smooth side surface, to which the present invention is not intended to be limited. The outer side surface of the spreading parts 43 may be given one or multiple ribs extending in the circumferential direction. The number of the spreading parts 43 provided at the tip portion of the spreading sleeve 4 is generally three or four. Or, five or more spreading parts may be provided. The spreading sleeve 4 of the aforementioned structure is attached to the shaft part 23 such that the tip portion of the spreading sleeve 4 at which the spreading parts 43 are formed is directed toward a tip portion of the shaft part 23 of the anchor bolt 2.

The cone nut 5 forms a cone part 6 to be placed at the tip portion of the shaft part 23. The outer shape of the cone nut 5 is a truncated cone the outer diameter of which gradually reduces in the axial direction, and the circumferential side surface of the cone nut 5 forms a smoothly tapered surface 51. A screw through hole 52 to threadedly engage the male screw thread formed at the shaft part 23 is defined in the inner central part of the cone nut 5. The cone nut 5 is attached to a tip end 23a of the shaft part 23 with the edge of a smaller diameter of the cone nut 5 engaging in the tip portion of the spreading sleeve 4. The larger diameter of the cone nut 5 is the same as, or slightly smaller than the outer diameter of the spreading sleeve 4.

In the first preferred embodiment, the expansion member 3 in the form of an inverted V-shape, the spreading sleeve 4, and the cone nut 5 are attached in this order to the shaft part 23 of the anchor bolt 2 from the tip portion of the shaft part 23, thereby forming the anchor 1 as shown in Figs. 1, 2 and 3. In the anchor 1 thereby formed, the bent part 33 of the expansion member 3 preferably projects outwardly with respect to a lower end portion of the spreading sleeve 4. This for example means that the plate body 31 forming the expansion member 3 preferably has a width that is greater than the diameter of the spreading sleeve 4.

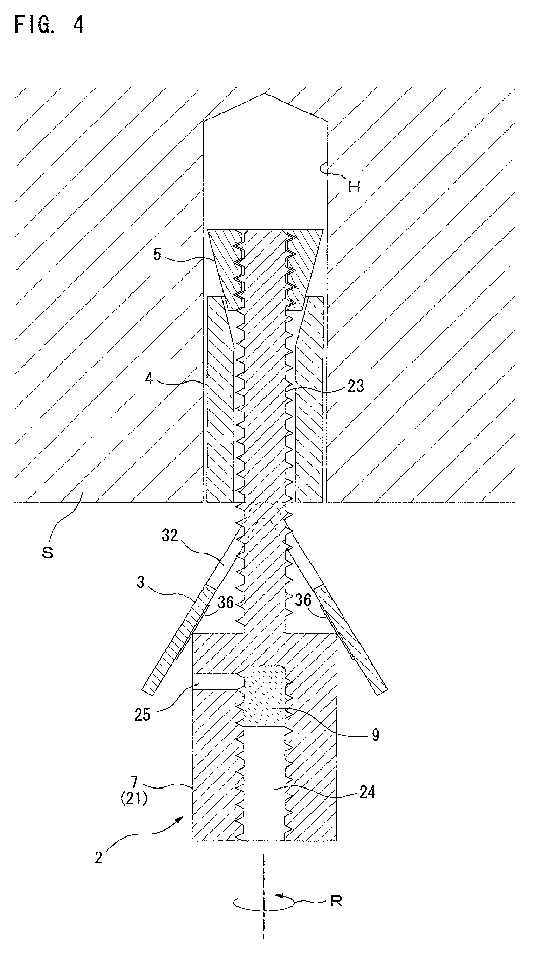

Placement of the anchor 1 of the first preferred embodiment is described next. Figs. 4, 5 and 6 show an exemplary flow of placement of the anchor 1. First, as shown in Fig. 4, a tip portion of the anchor 1 of the aforementioned structure is inserted into the hole H defined in a skeleton S such as a ceiling structure. The diameter of the hole H is substantially the same as that of the spreading sleeve 4. The depth of the hole H is substantially the same as or greater than the length of the shaft part 23 of the anchor bolt 2.

Insertion of the tip portion of the anchor 1 into the hole H makes the circumferential side surface of the spreading sleeve 4 contact with the inner wall of the hole H to generate friction therebetween. So, the lower surface of the rotation control section 7 of the anchor bolt 2 is struck with a hammer and the like to drive the anchor 1 into the hole H. Then, the tip portion of the anchor 1 is inserted into the hole H such that the substantially entire part of the spreading sleeve 4 is placed inside the hole H as shown in Fig. 4. At this time, the bent part 33 at the top of the expansion member 3 is in contact for example with the edge of the hole H.

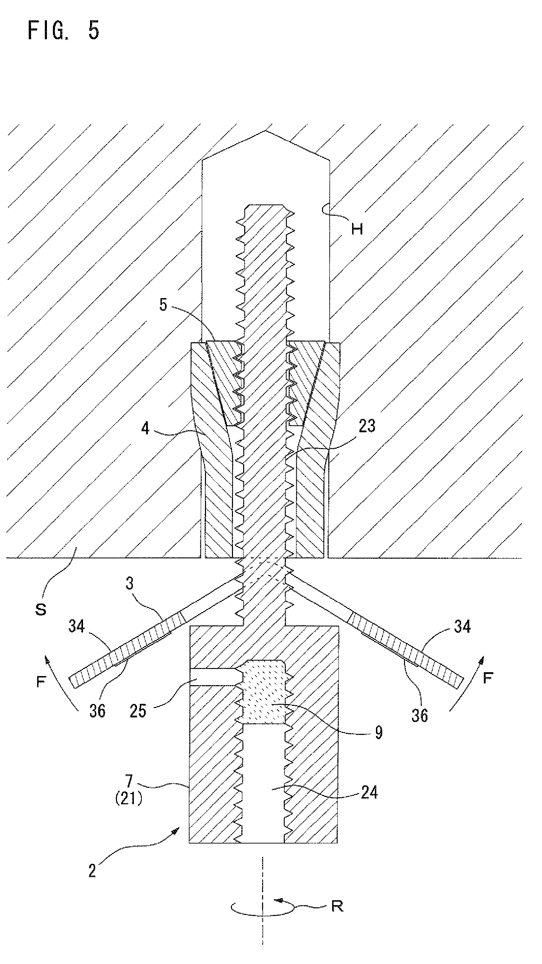

After the tip portion of the anchor 1 is inserted into the hole H as shown in Fig. 4, a clamping tool such as a torque wrench is attached to the nut part 21, so the rotation control section 7 of the anchor bolt 2 is caused to rotate in a direction indicated by an arrow R in Fig. 4. At this time, a worker may conduct his operation to cause the rotation control section 7 to rotate at a floor after attaching an extension jig to the clamping tool. The rotation at the base portion of the anchor bolt 2 causes the shaft part 23 to rotate, thereby driving the cone nut 5 into the spreading sleeve 4. To be specific, the condition of the cone nut 5 at this stage is such that the edge of a smaller diameter (lower end portion) of the cone nut 5 engages in the tip portion of the spreading sleeve. Further, the spreading sleeve 4 is prevented from rotating as it is in contact with the inner wall of the hole H. So, the rotation of the shaft part 23 does not cause the cone nut 5 to rotate, but which drives the cone nut 5 further from the tip portion of the spreading sleeve 4 into the spreading sleeve 4. As a result, the cone nut 5 makes the spreading parts 43 of the spreading sleeve 4 spread outwardly as shown in Fig. 5. At this time, the spreading parts 43 of the spreading sleeve 4 spread outwardly in a radius direction such that they press the inner wall of the hole H, thereby fixing the anchor 1 to the hole H.

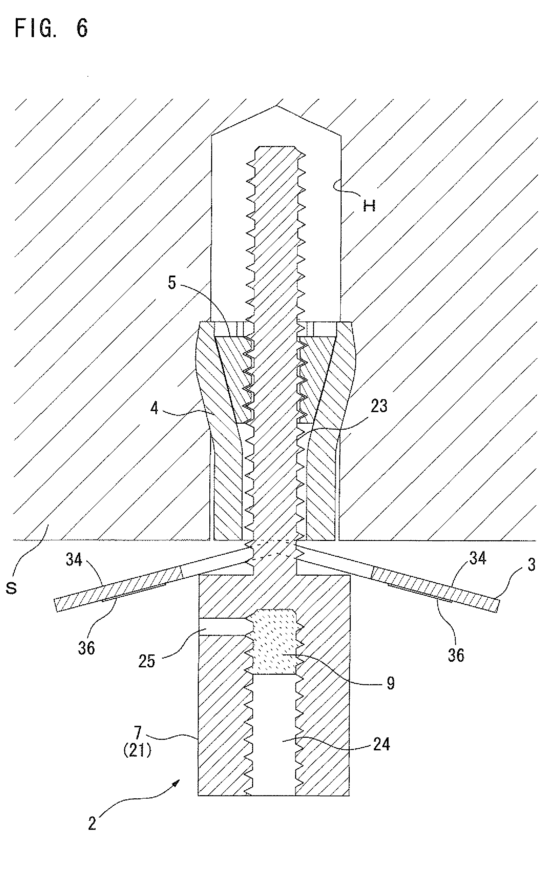

The rotation of the base portion of the anchor bolt 2 causes the shaft part 23 to be threadedly driven deeper into the hole H. At this time, the pressing part 22 as part of the rotation control section 7 presses the expansion parts 34 of the expansion member 3 from below, thereby causing the wing-like expansion parts 34 to expand in a direction indicated by an arrow F in Fig. 5 in which the expansion parts 34 get farther from each other. The wing-like expansion parts 34 thereafter expand to such a degree that an angle defined therebetween becomes a predetermined angle or more, so the identifying member 36 provided at the lower surface of each of the expansion parts 34 can be recognized visually from below as shown in Fig. 6. This state means that the anchor 1 is favorably fixed to the skeleton S, so the placement is completed.

In the example shown in Fig. 6, the tip portion of the shaft part 23 does not reach the bottom end of the hole H. Alternatively, the placement may be finished at a time when the tip portion of the shaft part 23 reaches the bottom end of the hole H. In this case, the expansion parts 34 of the expansion member 3 expand to such a degree that the expansion member 3 is substantially horizontal. Further, the expansion member 3 in this state also functions as a washer, thereby preventing damage on the skeleton S around the hole H.

In the aforementioned placement of the anchor 1, the shaft part 23 is not threadedly driven deeper into the bottom portion of the hole H at an initial stage of the rotation control of the rotation control section 7 of the anchor bolt 2. The rotation of the shaft part 23 at this stage drives the cone nut 5 into the spreading sleeve 4, by which the cone nut 5 causes the spreading parts 43 of the spreading sleeve 4 to spread. The cone nut 5 is not caused to move thereafter by the rotation of the shaft part 23. So , the rotation of the shaft part 23 at a subsequent stage causes the shaft part 23 to be threadedly driven deeper into the bottom portion of the hole H. This means that, in the placement of the anchor 1 of the first preferred embodiment, the anchor 1 has already been fixed at a time when the expansion parts 34 of the expansion member 3 start to expand in a direction in which the expansion parts 34 get farther from each other. The base portion of the anchor bolt 2 rotates further to cause the wing-like expansion parts 34 to expand to such a degree that an angle defined therebetween becomes a predetermined angle or more. The expansion parts 34 in these expanded states indicate that the anchor 1 has been placed favorably.

Axial force exerted for expansion of the wing-like expansion parts 34 can be controlled by changing the thickness of the expansion member 3 of the anchor 1. As a specific example, in order for the expansion parts 34 to expand, strong axial force should be exerted for threaded insertion of the shaft part 23 if the expansion member 3 has a great thickness. In contrast, axial force required for expansion of the expansion parts 34 is smaller if the expansion member 3 has a small thickness. This means that different thicknesses of the expansion member 3 result in different rotation torques and axial forces exerted for expansion of the expansion parts 34. So, on condition that the expansion member 3 has a thickness suitably defined according to the diameter of the shaft part 23, for example, the expansion parts 34 in their expanded states indicate that the rotation torque and the axial force of the anchor bolt 2 are the same as or greater than their predetermined values. In other words, if the thickness of the expansion member 3 is suitably defined in advance, the tightening force of the anchor bolt 2 can be checked by seeing the degree of opening of the expansion parts 34. The thickness of the expansion member 3 is preferably within a range of from 0.1 to 0.5 times the diameter of the shaft part 23, for example.

As a result, after the anchor 1 of the first preferred embodiment is placed on the ceiling structure, a worker or a field supervisor checks the placement condition of the anchor 1 with significantly reduced labor. To be specific, the worker or the field supervisor is not required to be immediately near the anchor 1 to check to see if the expansion member 3 of the anchor 1 placed on the ceiling structure is in the expanded state. The worker or the field supervisory can visually see the expansion condition from a position far from the anchor 1 such as a floor. This makes check of the placement condition of the anchor 1 easy, thereby enhancing working efficiency. Also, this check does not require climbing up to the height of the ceiling structure, thereby providing safety in the check.

In the first preferred embodiment, the identifying member 36 is provided to each of the expansion parts 34 of the expansion member 3. This specific structure realizes visual recognition of the identifying member 36 from a floor even if the ceiling structure is at a relatively great height, so that it is easily determined if the expansion member 3 is in the expanded state. Thus, the check is conducted more efficiently and safely. Use of a colored coating with fluorescent characteristics or phosphorescent characteristics, or a reflector for forming light reflection as the identifying member 36 is especially advantageous in that it makes it possible to easily determine if the expansion member 3 is in the expanded state.

The pressing part 22 of the first preferred embodiment provided at a tip portion of the nut part 21 is in the form of a cylinder. This prevents the corners of the nut part 21 from contacting the expansion member 3 when the base portion of the anchor bolt 2 is caused to rotate. Thus, the nut part 21 is allowed to rotate smoothly when the base portion of the anchor bolt 2 is caused to rotate.

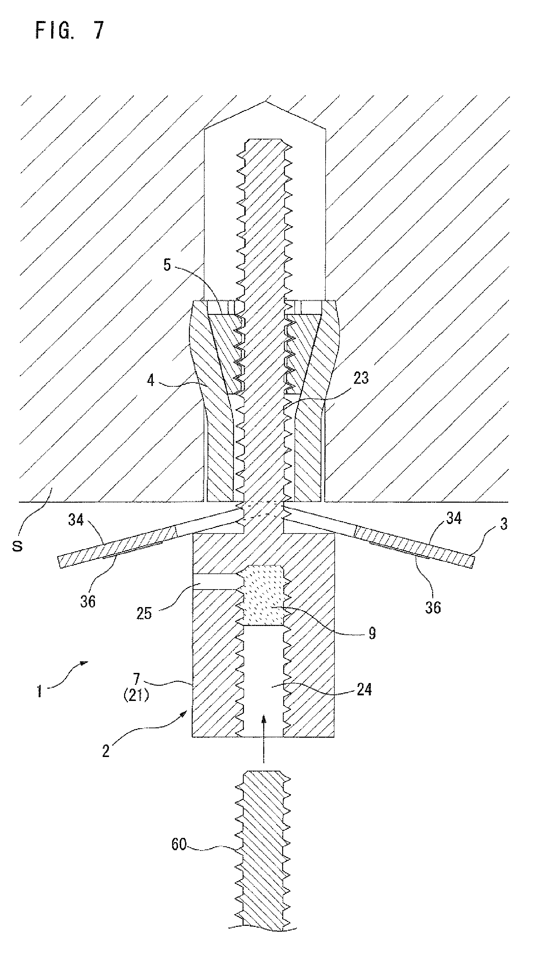

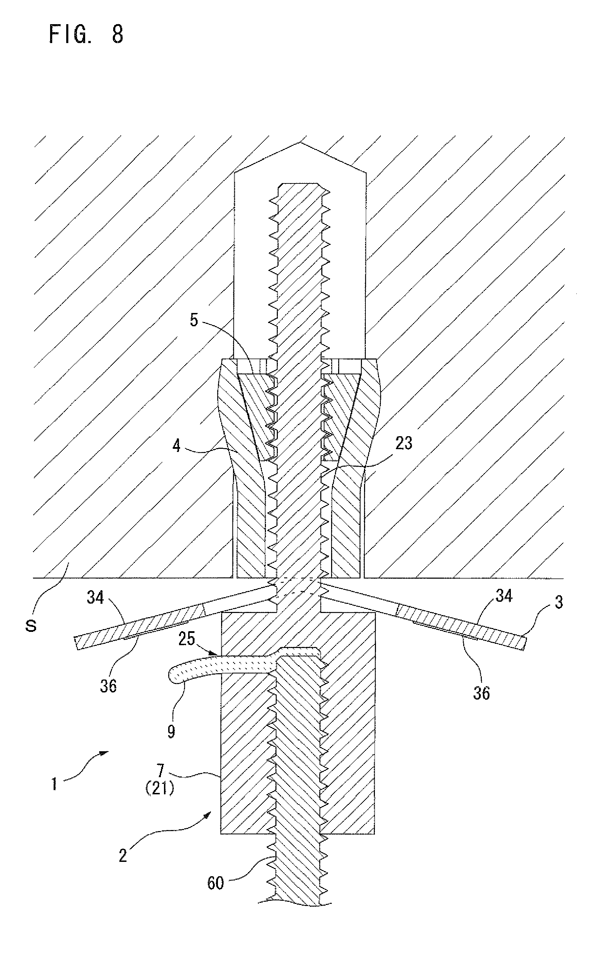

It is described next how a connecting bolt 60 that may be a hanger bolt or a bracing bolt is attached to the anchor 1 thereby fixed to the skeleton S. Figs. 7 and 8 show an exemplary flow of attachment of the connecting bolt 60 to the anchor 1. As shown in Fig. 7, the connecting bolt 60 is inserted for attachment into the screw hole 24 defined at the end surface (lower surface) of the base portion of the anchor bolt 2. The connecting bolt 60 is suspended from the skeleton S through the anchor 1. So, the connecting bolt 60 should be inserted for attachment to reach the bottom portion of the screw hole 24. The depth of insertion of the connecting bolt 60 into the screw hole 24 smaller than a certain depth results in faulty placement.

As described above, in the first preferred embodiment, the bottom portion of the screw hole 24 is filled with the flexible material 9 that is deformed in response to the attachment of the connecting bolt 60. So, a tip portion of the connecting bolt 60 presses the flexible material 9 as the connecting bolt 60 is threadedly driven into the screw hole 24. The flexible material 9 is deformed in response to pressing force applied from the connecting bolt 60, and which then enters into the through hole 25 at the side surface of the nut part 21. As the connecting bolt 60 is driven deeper into the screw hole 24, the flexible material 9 is caused to pass through the through hole 25 to go outside through the side surface of the nut part 21 as shown in Fig. 8. The placement is completed when the connecting bolt 60 reaches the bottom portion of the screw hole 24. At this time, the flexible material 9 going outside through the side surface of the nut part 21 indicates that the connecting bolt 60 has been placed favorably.

So, when the anchor 1 of the first preferred embodiment is placed on the ceiling structure, and the connecting bolt 60 is attached to the anchor 1 in this state, the placement condition of the anchor 1 and the attachment condition of the connecting bolt 60 can be checked at the same time. To be specific, a worker or a field supervisor visually checks to see from a floor if the expansion member 3 of the anchor 1 placed on the ceiling structure is in the expanded state. At the same time, the worker or the field supervisor checks to see from the floor if the flexible material 9 goes outside through the side surface of the nut part 21. Thus, the placement condition of the anchor 1 and the attachment condition of the connecting bolt 60 can be checked at the same time, resulting in further enhanced working efficiency. A worker responsible for attachment of the connecting bolt 60 is also allowed to know the completion of the placement.

As described above, oil-based clay colored for example in red is used as the flexible material 9. This specific feature makes it possible to easily determine if the flexible material 9 goes outside through the side surface of the nut part 21. To be specific, if made of an argillaceous material, the flexible material 9 appearing on the side surface of the nut part 21 keeps sticking to the side surface of the nut part 21 without dropping to a floor, so that the attachment condition of the connecting bolt 60 can easily be checked individually. Also, if made of oil-based clay, the flexible material 9 functions as a rust inhibitor as described above, thereby suppressing deterioration of the connecting bolt 60.

As described above, the structure of the anchor 1 of the first preferred embodiment is such that the rotation of the rotation control section 7 provided at the base portion of the anchor bolt 2 causes the cone nut 5 placed at the tip portion of the anchor bolt 2 to move toward the base portion of the shaft part 23, thereby causing the spreading parts 43 of the spreading sleeve 4 to spread outwardly. In this structure, the cone nut 5 threadedly engages the shaft part 23, thereby preventing the cone nut 5 from falling off the inside of the spreading sleeve 4 despite the generation of vibration, for example. So, the anchor 1 can be fixed firmly to the ceiling structure.

The structure of the anchor 1 is also such that the rotation control section 7 moves toward the tip portion of the shaft part 23 in response to the rotation of the rotation control section 7, thereby pressing the expansion member 3 to cause the expansion parts 34 to expand. The structure of the anchor 1 of the first preferred embodiment is specifically such that the rotation of the rotation control section 7 of the anchor bolt 2 causes the shaft part 23 to rotate to drive the cone nut 5 into the spreading sleeve 4, thereby causing the spreading parts 43 to spread outwardly. At the same time, the rotation control section 7 of the anchor bolt 2 presses the expansion member 3 in response to threaded insertion of the shaft part 23, thereby causing the wing-like expansion parts 34 to expand. So, the wing-like expansion parts 34 are in their expanded states if the anchor 1 is favorably fixed to the skeleton S such as a ceiling structure. As a result, the placement condition of the anchor 1 can be checked easily, thereby realizing efficient and safe check after the placement.

The closed-end screw hole 24 to receive therein the connecting bolt 60 is defined at the end surface of the nut part 21 provided at the base portion of the anchor bolt 2. Further, the through hole 25 communicatively coupled to the bottom portion and its vicinity of the screw hole 24 is defined in the side surface of the nut part 21 of the anchor bolt 2. Further, the bottom portion of the screw hole 24 is filled with the flexible material 9 that is deformed in response to the attachment of the connecting bolt 60. So, the flexible material 9 appears on the side surface of the nut part 21 of the anchor bolt 2 if the connecting bolt 60 is favorably attached to the anchor 1 fixed to the skeleton S such as a ceiling structure. Thus, the attachment condition of the connecting bolt 60 attached to the anchor 1 can also be checked easily. This also realizes efficient and safe check after the placement.

### (Second Preferred Embodiment)

A second preferred embodiment of the present invention is described next.

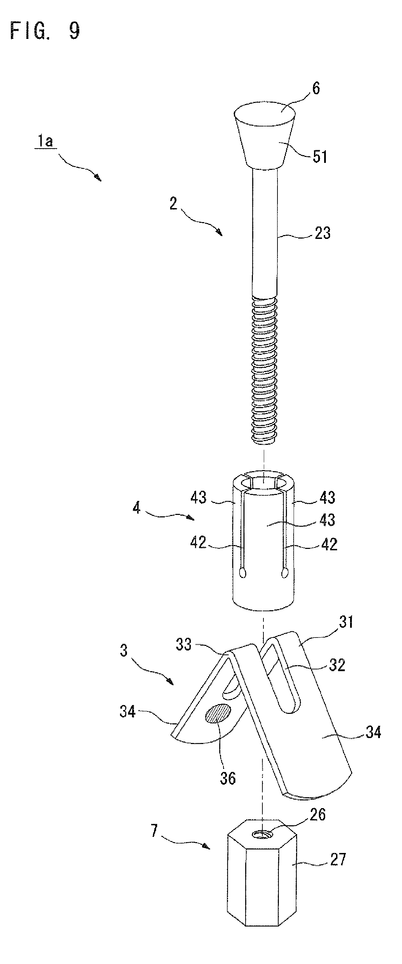

Fig. 9 is a perspective view of an anchor 1a of the second preferred embodiment with all parts of the anchor 1a separated. As shown in Fig. 9, the anchor 1a of the second preferred embodiment includes an anchor bolt 2, a V-shaped expansion member 3, a spreading sleeve 4, and a nut member 27. Like the anchor 1 described above, the anchor 1a is to be attached to various types of skeletons such as concrete buildings and structures, and is suited for attachment especially to ceiling structures. The anchor 1a of the second preferred embodiment differs from the anchor 1 of the first preferred embodiment in that the anchor bolt 2 and a rotation control section 7 have different structures. The structures of the expansion member 3 and the spreading sleeve 4 are the same as those of the first preferred embodiment. The difference of the second preferred embodiment from the first preferred embodiment is described below.

The anchor bolt 2 of the second preferred embodiment includes a shaft part 23 with a male screw thread, and a cone part 6 integrally placed to a tip portion of the shaft part 23. The outer shape of the cone part 6 is a truncated cone the outer diameter of which gradually reduces in a direction toward a base portion of the shaft part 23, and the circumferential side surface of the cone part 6 forms a smoothly tapered surface 51. The cone part 6 is coupled at its edge of a smaller diameter to the shaft part 23, so the anchor bolt 2 is constructed of the shaft part 23 and the cone part 6. While the male screw thread is shown to be defined at a lower portion of the shaft part 23 in Fig. 9, the male screw thread may alternatively be defined throughout the shaft part 23.

The rotation control section 7 of the second preferred embodiment is constructed of the nut member 27 with a screw hole 26 to threadedly engage the shaft part 23 of the anchor bolt 2. The nut member 27 is attached to the shaft part 23 at a base portion (lower portion) of the anchor bolt 2.

In the second preferred embodiment, the spreading sleeve 4, the expansion member 3 in the form of an inverted V-shape, and the nut member 27 are attached in this order to the shaft part 23 of the anchor bolt 2 from the base portion of the shaft part 23, thereby forming the anchor 1a as shown in Fig. 9. To be specific, like that of the first preferred embodiment, the anchor bolt 2 of the second preferred embodiment includes the cone part 6 placed at its tip portion, and the rotation control section 7 placed at its base portion. The spreading sleeve 4 is attached to the shaft part 23 while the edge of a smaller diameter of the cone part 6 engages in tip portions of the spreading parts 43. Further, while being placed between the spreading sleeve 4 attached to the shaft part 23 and the rotation control section 7 (nut member 27) placed at the base portion of the shaft part 23, the expansion member 3 permits the shaft part 23 to pass therethrough.

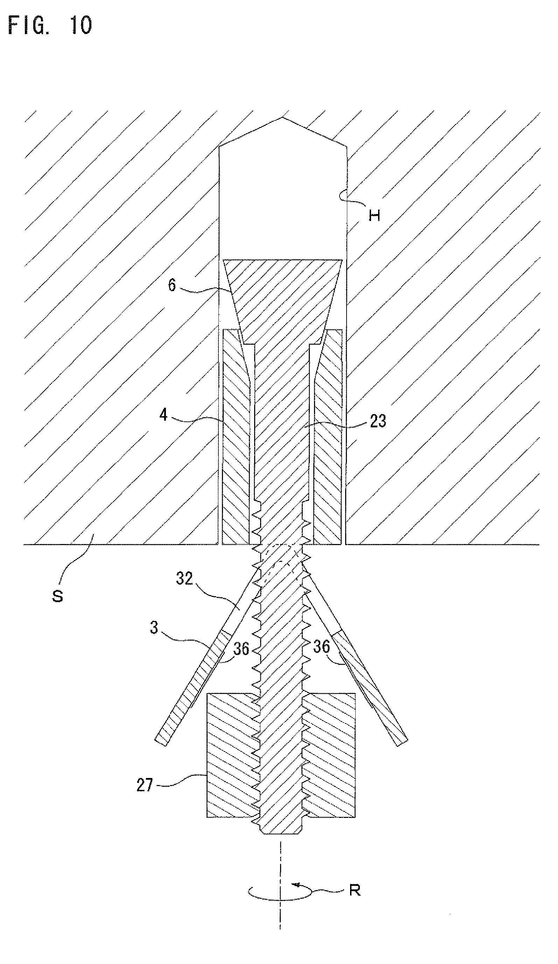

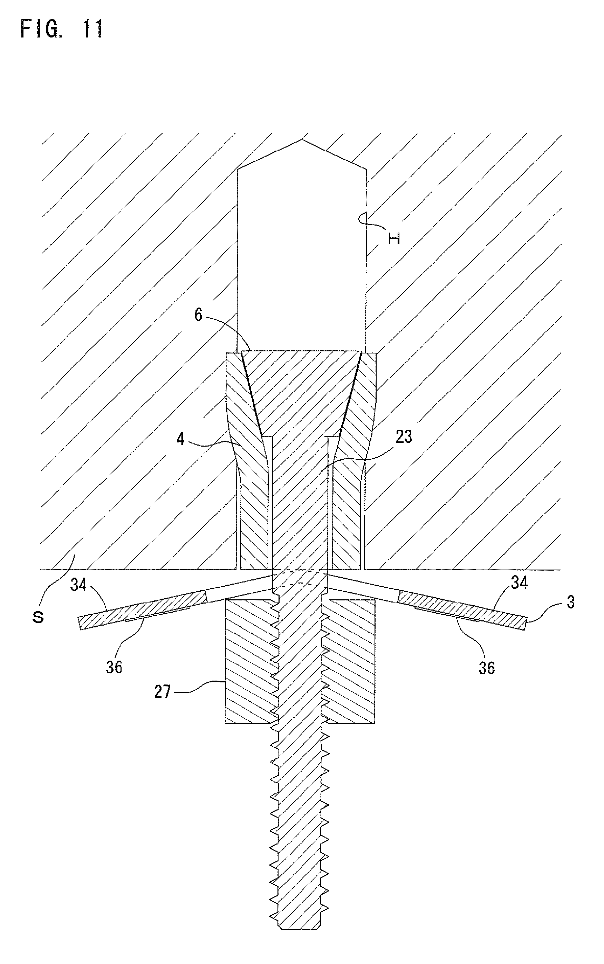

Placement of the anchor 1a of the second preferred embodiment is described next. Figs. 10 and 11 show an exemplary flow of placement of the anchor 1a. First, like in the first preferred embodiment, a tip portion of the anchor 1a of the aforementioned structure is inserted into a hole H defined in a skeleton S such as a ceiling structure as shown in Fig. 10.

After the tip portion of the anchor 1a is inserted into the hole H as shown in Fig. 10, a clamping tool such as a torque wrench is attached to the nut member 27, so the nut member 27 attached to the anchor bolt 2 is caused to rotate in a direction indicated by an arrow R in Fig. 10. So, the nut member 27 is threadedly driven along the male screw thread of the shaft part 23 toward the tip portion of the shaft part 23. When coming into contact with the expansion member 3, the nut member 27 exerts axial force on the expansion parts 34 of the expansion member 3, while exerting downward axial force on the shaft part 23. Thus, the expansion parts 34 of the expansion member 3 are caused to expand in a direction in which the expansion parts 34 get farther from each other. At the same time, the shaft part 23 is caused to move downward, so that the cone part 6 enters into the spreading sleeve 4 through its tip portion. As a result, the cone part 6 causes the spreading parts 43 of the spreading sleeve 4 to spread outwardly as shown in Fig. 11. At this time, the spreading parts 43 of the spreading sleeve 4 spread outwardly in a radius direction such that they press the inner wall of the hole H, thereby fixing the anchor 1a to the hole H.

The nut member 27 is threadedly driven along the shaft part 23. So, an upper portion of the nut member 27 presses the expansion parts 34 of the expansion member 3 from below, thereby causing the wing-like expansion parts 34 to expand in a direction in which the expansion parts 34 get farther from each other. The wing-like expansion parts 34 thereafter expand to such a degree that an angle defined therebetween becomes a predetermined angle or more, so the identifying member 36 provided at the lower surface of each of the expansion parts 34 can be recognized visually from below as shown in Fig. 11. This state means that the anchor 1a is favorably fixed to the skeleton S, so the placement is completed.

As described above, the structure of the anchor 1a of the second preferred embodiment is also such that the rotation of the rotation control section 7 (nut member 27) provided at the base portion of the anchor bolt 2 causes the cone part 6 placed at the tip portion of the anchor bolt 2 to move toward the base portion of the shaft part 23, thereby causing the spreading parts 43 of the spreading sleeve 4 to spread outwardly. This structure prevents the cone part 6 from falling off the inside of the spreading sleeve 4 despite the generation of vibration, for example. So, the anchor 1a can be fixed firmly to the ceiling structure.

The structure of the anchor 1a is also such that the rotation control section 7 (nut member 27) moves toward the tip portion of the shaft part 23 in response to the rotation of the rotation control section 7, thereby pressing the expansion member 3 to cause the expansion parts 34 to expand. The structure of the anchor 1a of the second preferred embodiment is specifically such that the rotation of the nut member 27 causes the cone part 6 to move toward the base portion of the shaft part 23, thereby causing the spreading parts 43 of the spreading sleeve 4 to spread outwardly. At the same time, the nut member 27 moves toward the tip portion of the shaft part 23 to press the expansion member 3, thereby causing the expansion parts 34 to expand. So, like in the first preferred embodiment, the wing-like expansion parts 34 are in their expanded states in the second preferred embodiment if the anchor 1 a is favorably fixed to the skeleton S such as a ceiling structure. As a result, the placement condition of the anchor 1a can be checked easily, thereby realizing efficient and safe check after the placement.

### (Third Preferred Embodiment)

A third preferred embodiment of the present invention is described next. The main structure of the anchor of the third preferred embodiment is substantially the same as that of the anchor 1 of the first preferred embodiment. The difference of the anchor 1 of the third preferred embodiment from one of the first preferred embodiment is a deformable material 9 provided at the bottom portion of the screw hole 24 defined in the anchor bolt 2.

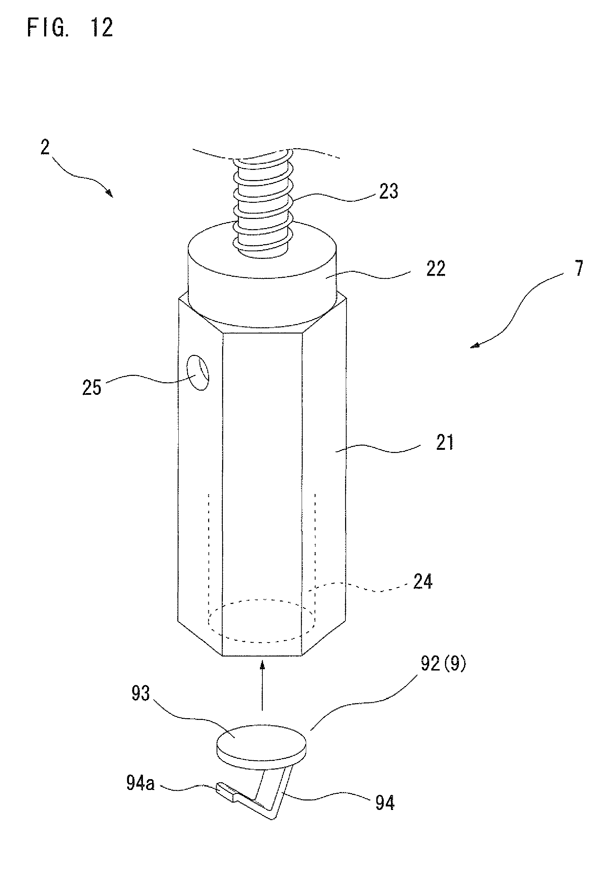

Fig. 12 is a perspective view showing an enlarged view of the nut part 21 of the anchor bolt 2 of the third preferred embodiment. As described above, the closed-end screw hole 24 is defined at the lower end surface of the nut part 21. Further, the through hole 25 communicatively coupled to the bottom portion and its vicinity of the screw hole 24 is defined in the side surface of the nut part 21 of the anchor bolt 2. A part 92 made of a shaped resin which has flexibility such as polypropylene is attached to the bottom portion of the screw hole 24.

The part 92 includes a disk-shaped attachment part 93 and a flexible part 94 supported by the attachment part 93 with being connected at a lower portion of an edge of the attachment part 93. The attachment part 93 formed to be the same as, or slightly smaller than the inner diameter of the screw hole 24 is inserted into the screw hole 24 with which placed nearest the hole, thereby being attached to the bottom portion of the screw hole 24. One end portion of the flexible part 94 is fixed to the attachment part 93, and has its shape bended at the central part into the substantial V-shape. A tip portion 94a of another end portion side of the flexible part 94 is formed in advance to project outwardly with respect to the edge of the attachment part 93.

In response to insertion for attachment into the screw hole 24 with the part 92 placed nearest the hole as shown in Fig. 12, the part 92 of this kind is inserted for attachment with the attachment part 93 being directed toward the bottom portion of the screw hole 24. The flexible part 94 is compressed to form the slightly small bending angle and inserted. The attachment part 93 is inserted to reach the bottom portion of the screw hole 24. As a result, the part 92 is attached. The tip portion 94a of the flexible part 94 is placed at a position, facing the through hole 25 in the screw hole 24. As the part 92 is attached to the bottom portion of the screw hole 24, some parts of the tip portion 94a of the flexible part 94 in the screw hole 24 enter into the through hole 25. The force to restore to the original substantial V-shape of the compressed flexible part 94 causes both ends of the flexible part 94 to press the inner wall of the screw hole 24. As a result, the part 92 is hold at the bottom portion of the screw hole 24, which prevents the part 92 from dropping from the screw hole 24.

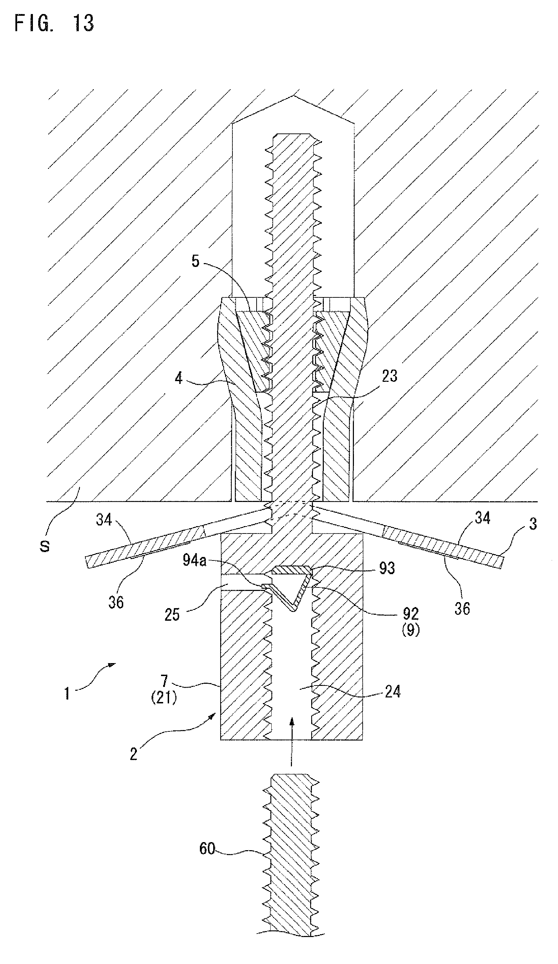

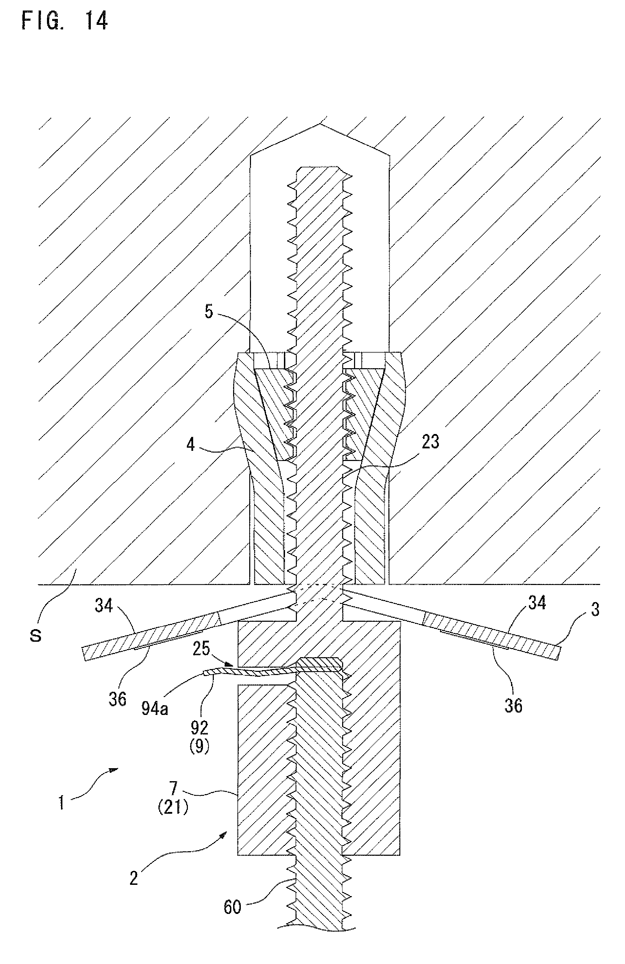

Figs. 13 and 14 show an example of a process of attachment of the connecting bolt 60 to the anchor 1 of the third preferred embodiment fixed to the skeleton S such as the ceiling structure. The process of the placement of the anchor 1 on the skeleton S in the third preferred embodiment is the same as that described in the first preferred embodiment. The part 92 placed at the bottom portion of the screw hole 24 is hold at the bottom portion of the screw hole 24 as described above. So, the part 92 does not drop off from the screw hole 24 even when vibration has a direct impact on the anchor bolt 2 during the placement process, for example. Prior to attachment of the connecting bolt 60 to the screw hole 24, the tip portion 94a of the flexible part 94 forming the part 92 is directed toward the through hole 25 at the inner side of the screw hole 24 as shown in Fig. 13.

In response to the fixation of the anchor 1 on the skeleton S, the connecting bolt 60 is inserted for attachment into the screw hole 24 defined at the end surface (lower surface) of the base portion of the anchor bolt 2 as illustrated in Fig. 13. A tip potion of the connecting bolt 60 presses the portion bended into the substantial V-shape of the flexible part 94 as the connecting bolt 60 is threadedly driven into the screw hole 24. So, the flexible part 94 is gradually extended in response to pressing force applied from the connecting bolt 60. The tip portion 94a of the flexible part 94 further enters into inside of the through hole 25 defined at the side surface of the nut part 21.

As the connecting bolt 60 is driven deeper into the screw hole 24, the tip portion 94a of the flexible part 94 is caused to pass through the through hole 25 to go outside through the side surface of the nut part 21 as shown in Fig. 14. The placement is completed when the connecting bolt 60 reaches the bottom portion of the screw hole 24. At this time, the tip portion 94a of the flexible part 94 going outside through the side surface of the nut part 21 indicates that the connecting bolt 60 has been placed favorably.

Therefore, the anchor 1 of the third preferred embodiment is placed on the ceiling structure, and the connecting bolt 60 is attached to the anchor 1 in this state, the placement condition of the anchor 1 and the attachment condition of the connecting bolt 60 can be checked at the same time, which is the same as the first preferred embodiment.

As described above, in the third preferred embodiment, the flexible part 94 of the part 92 projects outside through the side surface of the nut part 21 in response to the attachment of the connecting bolt 60 to the screw hole 24 of the anchor bolt 2. As being connected with the attachment part 93 attached to the bottom portion of the screw hole 24, the flexible part 94 of this kind does not involve the problem of falling off the side surface of the nut part 21 after the completion of the placement of the connecting bolt 60.

If the deformable material 9 is formed from the flexible material 91 such as that made of oil-based clay like in the above-described first preferred embodiment, the flexible material 91 is caused to go outside through the side surface of the nut part 21 in response to the completion of the placement of the connecting bolt 60. In such a case, some parts went outside may be picked away by the worker due to his or her carelessness. If such situation occurs, the specific feature of the first preferred embodiment does not make it possible to check the condition if the connecting bolt 60 is placed favorably.

In contrast, the flexible part 94 of the third preferred embodiment projects through the side surface of the nut part 21 does not fall off the side surface of the nut part 21 as described above. So, the specific feature of the third preferred embodiment makes it possible to check the condition if the connecting bolt 60 is placed favorably, and that is always accurate. Preferably, the part 92 as described above is colored in a certain color such as red, for example. The part 92 of this kind is not necessary to be made of resin.

### (Modifications)

The aforementioned anchors 1 and 1a are of the preferred embodiments of the anchor of the present invention. Modifications and variations of the specific structures of the anchors 1 and 1a described below can be devised where appropriate as long as they do not depart from the scope of the invention.

The aforementioned anchors 1 and 1a are suited for attachment especially to ceiling structures. However, the anchors 1 and 1a are not necessarily intended to be fixed to ceiling structures.

In the above-described preferred embodiments, the expansion member 3 permits the shaft part 23 to pass therethrough with the tip ends of the expansion parts 34 pointing downward. Alternatively, the expansion member 3 may permit the shaft part 23 to pass therethrough with the tip ends of the expansion parts 34 pointing upward, if this still causes the rotation control section 7 to press the expansion member 3 favorably to allow suitable expansion of the expansion parts 34. As an example, the tip ends of the expansion parts 34 will contact a ceiling structure around the hole H if they point upward. So, the skeleton S preferably has a smooth surface of certain strength. Meanwhile, if the tip ends of the expansion parts 34 point upward while the skeleton S has a rough or fragile surface, the expansion parts 34 may not expand normally, or the surface of the skeleton S around the hole H may be damaged. So, in order for the expansion parts 34 to expand suitably irrespective of the condition of the surface of the skeleton S, like in the above-described preferred embodiments, it is more preferable that the expansion member 3 permits the shaft part 23 to pass therethrough with the tip ends of the expansion parts 34 of the expansion member 3 pointing downward (namely, with the expansion member 3 in an inverted V-shape).

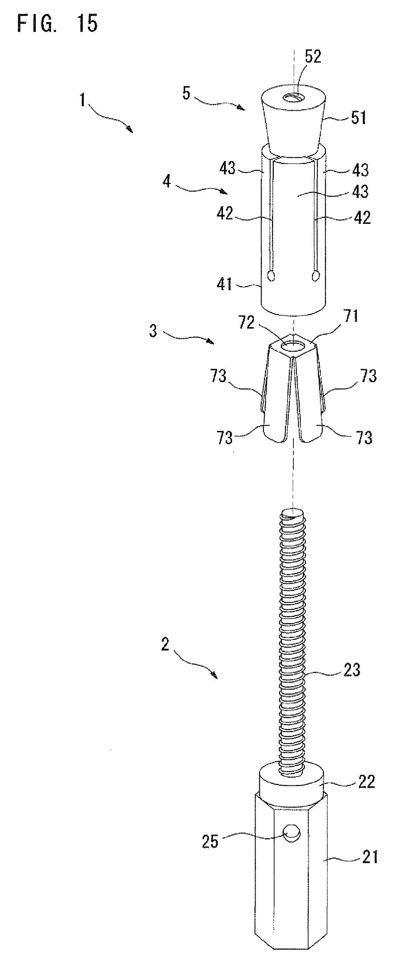

In the above-described preferred embodiments, the expansion member 3 is formed by bending the plate body 31 that is a substantially strip-shaped flat metal plate, to which the present invention is not intended to be limited. As shown in Fig. 15, the expansion member 3 may also be formed by bending a cross-shaped plate body 71, for example. To be specific, the expansion member 3 shown in Fig. 15 has a hole 72 defined in the central plate of the cross-shaped plate body 71. The hole 72 is defined to permit the shaft part 23 to pass therethrough. Wing-like sections extending in four directions from the central plate are bent at a predetermined angle, thereby defining four expansion parts 73. The expansion member 3 of this shape is still pressed by the base portion of the anchor bolt 2 in response to threaded insertion of the shaft part 23 as described above, thereby causing the wing-like expansion parts 73 to expand. Thus, the expansion member 3 of this structure achieves the same effect as that described above. In particular, the wing-like expansion parts 73 expand in four directions. So, the expansion member 3 shown in Fig. 15 brings about an advantage as it reduces blind spots occurring when the expansion conditions of the wing-like expansion parts 73 are checked after placement.

The expansion member 3 shown in Fig. 15 permits the shaft part 23 to pass therethrough with the tip ends of the expansion parts 73 pointing downward. As described above, the expansion member 3 shown in Fig. 15 may also permit the shaft part 23 to pass therethrough with the tip ends of the expansion parts 73 pointing upward, if this still allows the expansion parts 73 to expand suitably in response to threaded insertion of the anchor bolt 2. Meanwhile, in order for the expansion parts 73 to expand suitably irrespective of the condition of a surface of the skeleton S, it is more preferable that the expansion member 3 permits the shaft part 23 to pass therethrough with the tip ends of the expansion parts 73 pointing downward as shown in Fig. 15.

While the expansion member 3 of the present invention is described as being formed by bending, this is not the only way of forming the expansion member 3. What is required for the expansion member 3 is to permit the shaft part 23 to pass therethrough while being placed between the base portion of the anchor bolt 2 and the spreading sleeve 4. What is also required for the expansion member 3 is to have the wing-like expansion parts 34 or 73 that are caused to expand by pressing force exerted in the axial direction of the shaft part 23.

While the identifying member 36 is described as being provided at part of the lower surface of each of the expansion parts 34 or 73, the identifying member 36 may also be provided throughout the lower surface of each of the expansion parts 34 or 73.

The rotation control section 7 of the first preferred embodiment provided at the base portion of the anchor bolt 2 includes the nut part 21 and the cylindrical pressing part 22. Meanwhile, provision of the cylindrical pressing part 22 at the base portion of the anchor bolt 2 is not an absolute necessity. So, only the nut part 21 may be provided at the base portion of the anchor bolt 2. In this case, the tip portion of the nut part 21 functions as a pressing part. Or, a washer functioning as a pressing part may be provided between the base portion of the anchor bolt 2 and the expansion member 3.

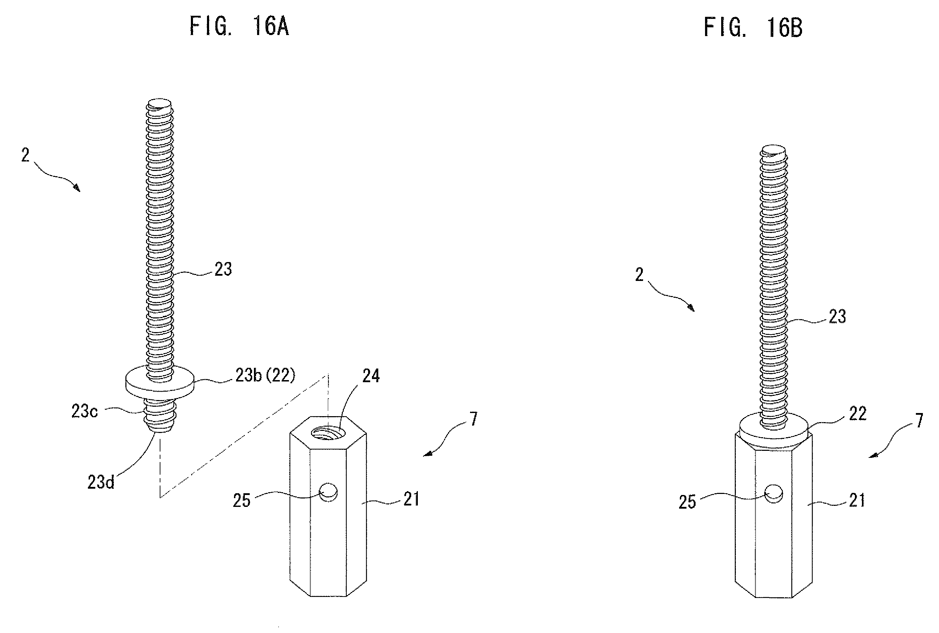

In the above-described first and third preferred embodiments, the nut part 21 is integrally provided at the shaft part 23 of the anchor bolt 2, though, the present invention is not intended to be limited to this. Figs. 16A and 16B show an exemplary structure of the anchor bolt 2 having the shaft part 23 and the nut part 21 provided separately. Fig. 16A shows an example of the shaft part 23 and the nut part 21 separately provided. The shaft part 23 includes a flange 23b placed at a position from the predetermined distance from below and a predetermined length male screw thread part 23c formed on the lower side from the flange 23b. The screw hole 24 is defined such that penetrates through the nut part 21 in the axial direction (vertical direction) to extend further into the nut part 21. The through hole 25 as described above is defined at the side surface of the nut part 21. The through hole 25 penetrates into the screw hole 24 defined in the nut part 21.

The male screw thread part 23c formed at the lower portion of the shaft part 23 is attached to the screw hole 24 of the nut part 21 as shown in Fig. 16A. As the male screw thread part 23c is threadedly driven deeper into the screw hole 24, the flange 23b placed at the shaft part 23 is caused to be in contact with the tip portion of the nut part 21, and the shaft part 23 and the nut part 21 are fixed to each other. As a result, the anchor bolt 2 having the shaft part 23 and the nut part 21 formed integrally is realized as illustrated in Fig. 16B. With the anchor bolt 2, the flange 23b placed at the shaft part 23 functions as the above-described pressing part 22.

As the shaft part 23 and the nut part 21 are fixed to each other as described above, a tip portion 23d of the male screw thread part 23c at the shaft part 23 is placed at a position determined in advance of the screw hole 24 defined in the nut part 21, thereby functioning as the bottom portion of the screw hole 24. The above-described connecting bolt 60 is attached to the anchor bolt 2 having the shaft part 23 and the nut part 21 formed integrally with the tip portion 23d of the male screw thread part 23c as its bottom portion. As already described in the first and the third preferred embodiments, in response to the insertion of the connecting bolt 60 into the screw hole 24, the deformable material 9 is deformed between the tip portion of the connecting bolt 60 and the bottom portion of the screw hole 24, thereby causing one part of the deformable material 9 to project outside of the nut part 21 from the through hole 25.

## Claims

1. An anchor (1,1a), comprising:
an anchor bolt (2) including a shaft part (23) with a male screw thread;
a cone part (6) placed at a tip portion of said shaft part (23), the cone part (6) having an outer diameter that gradually reduces in a direction toward a base portion of said shaft part (23);
a spreading sleeve (4) including spreading parts (43) formed at a tip portion of a tubular body, the spreading parts (43) being formed by a longitudinally cut slot (42) in such a manner that the spreading parts (43) spread outwardly, the spreading sleeve (4) being attached to said shaft part (23) while an edge of a smaller diameter of said cone part (6) engages in tip portions of said spreading parts (43);
a rotation control section (7) provided at a base portion of said shaft part (23), the rotation control section (7) having a diameter larger than the outer diameter of said shaft part (23); and
an expansion member (3) including wing-like expansion parts (34) caused to expand by pressing force exerted in the axial direction of said shaft part (23), the expansion member (3) permitting said shaft part (23) to pass therethrough while being placed between said spreading sleeve (4) attached to said shaft part (23) and said rotation control section (7) placed at the base portion of said shaft part (23), wherein
the rotation of said rotation control section (7) causes said cone part (6) to move toward the base portion of said shaft part (23), thereby causing said spreading parts (43) of said spreading sleeve (4) to spread outwardly, and the rotation of said rotation control section (7) also causes the rotation control section (7) to move toward the tip portion of said shaft part (23) to press said expansion member (3), thereby causing said expansion parts (34) to expand.

2. An anchor (1), comprising:
an anchor bolt (2) including a shaft part (23) with a male screw thread, and a rotation control section (7) provided at a base portion of said shaft part (23), the rotation control section (7) having a diameter larger than the outer diameter of said shaft part (23);
a spreading sleeve (4) including spreading parts (43) formed at a tip portion of a tubular body (41) that permits said shaft part (23) to pass therethrough, the spreading parts (43) being formed by a longitudinally cut slot (42) in such a manner that the spreading parts (43) spread outwardly;
a cone nut (5) having the outer diameter of which gradually reduces in the axial direction of said shaft part (23), the cone nut (5) including a screw through hole defined therein to threadedly engage the male screw thread of said shaft part (23), the cone nut (5) being attached to said shaft part (23) with an edge of a smaller diameter of the cone nut engaging in a tip portion of said spreading sleeve (4); and
an expansion member (3) including wing-like expansion parts (34) caused to expand by pressing force exerted in the axial direction of said shaft part (23), the expansion member (3) permitting said shaft part (23) to pass therethrough while being placed between said rotation control section (7) of said anchor bolt (2) and said spreading sleeve (4), wherein
said anchor bolt (2) causes said shaft part (23) to rotate in response to the rotation of said rotation control section (7) to drive said cone nut (5) into said spreading sleeve (4), thereby causing said spreading parts (43) to spread outwardly, and said rotation control section (7) presses said expansion member (3) in response to threaded insertion of said shaft part (23) to cause said wing-like expansion parts (34) to expand.

3. The anchor according to claim 1 or 2, wherein
a closed-end screw hole (24) to receive a bolt therein is defined at an end surface of said rotation control section (7) of said anchor bolt (2), and a through hole (25) communicatively coupled to a bottom portion and its vicinity of said screw hole (24) is defined in a side surface of said rotation control section (7) of said anchor bolt (2),
the bottom portion of said screw hole (24) is provided with a deformable material (9) that is deformed in response to attachment of said bolt in said screw hole (24), and
said deformable material (9) is deformed in response to attachment of said bolt in said screw hole (24) and is caused to project one part outside from said through hole (25).

4. The anchor according to claim 3, wherein said deformable material (9) is a flexible material (91) made of oil-based colored clay.

5. The anchor according to claim 3, wherein
said deformable material (9) includes an attachment part (93) attached to the bottom portion of said screw hole (24) and a flexible part (94) is bended in advance into a substantial V-shape and one end portion of which is fixed to said attachment part (93) while another end portion is placed at a position, facing said through hole (25), and
said flexible part (94) is caused to expand the bended portion in response to the attachment of said bolt in said screw hole (24), thereby allowing another end portion placed facing said through hole (25) to project outside from said through hole (25).

6. An anchor (1a), comprising:
an anchor bolt (2) including a shaft part (23) with a male screw thread, and a cone part (6) placed at a tip portion of said shaft part (23), the cone part (6) having an outer diameter that gradually reduces in a direction toward a base portion of said shaft part (23);
a spreading sleeve (4) including spreading parts (43) formed at a tip portion of a tubular body, the spreading parts (43) being formed by a longitudinally cut slot (42) in such a manner that the spreading parts (43) spread outwardly, the spreading sleeve (4) being attached to said shaft part (23) while an edge of a smaller diameter of said cone part (6) engages in tip portions of said spreading parts (43);
a nut member (27) threadedly engaging the male screw thread of said shaft part (23) at the base portion of said shaft part (23); and
an expansion member (3) including wing-like expansion parts (34) caused to expand by pressing force exerted in the axial direction of said shaft part (23), the expansion member (3) permitting said shaft part (23) to pass therethrough while being placed between said spreading sleeve (4) attached to said shaft part (23) and said nut member (27) placed at the base portion of said shaft part (23), wherein
the rotation of said nut member (27) causes said cone part (6) to move toward the base portion of said shaft part (23), thereby causing said spreading parts (43) of said spreading sleeve (4) to spread outwardly, and the rotation of said nut member (27) also causes the nut member (27) to move toward the tip portion of said shaft part (23) to press said expansion member (3), thereby causing said expansion parts (34) to expand.

7. The anchor according to one of claims 1 to 6, wherein said expansion member (3) further includes an identifying member (36) provided to each of said wing-like expansion parts (34) to expand, the identifying member (36) allowing check of the expansion condition of each of said expansion parts (34).
